# EUROPEAN PATENT APPLICATION

(11) **EP 4 664 776 A1**
(43) Date of publication of application: **17.12.2025**
(21) Application number: 24305931.8
(22) Date of filing: 14.06.2024
(51) Int. Cl.: H04B 5/48, H04B 1/04, H04B 7/06

(54) **DUAL-ANTENNA COMMUNICATION DEVICE**

(71) Applicant: NXP B.V., 5656 AG Eindhoven (NL)
(72) Inventor: Merlin, Erich, 5656 AG Eindhoven (NL); Kurvathodil, Manoj, 5656 AG Eindhoven (NL); Moreau, Olivier Claude, 31023 Toulouse Cedex 1 (FR); Caron, Claude, 31023 Toulouse Cedex 1 (FR)
(74) Representative: Krott, Michel

(57) **Abstract**

A dual-antenna communication device comprises a controller, a first antenna, a second antenna, wherein the controller is configured to select the first antenna via a first interface of the controller and to select the second antenna via a second interface of the controller, wherein the controller is configured to select the antennas via signal phases on the interfaces. In this way, no physical switches are needed for selecting and controlling the antennas, which may be advantageous because it may reduce the area of the printed circuit board, make it cheaper, and increase integration.

## Description

### TECHNICAL FIELD

The present disclosure relates to a dual-antenna communication device. Moreover, the present disclosure relates to a method of operating a dual-antenna communication device. The present disclosure furthermore relates to a computer-implemented method.

### BACKGROUND

CN 112086760 B, US 10,997,483 B2, CN 219697646 U and CN 107547103 A disclose dual antenna applications with external switches that select antennas.

CN 210838088 U discloses a dual antenna application with two antennas in parallel, the second antenna being directly in parallel to the first antenna through a balun.

CN 111934725 B discloses an NFC communication device using in-phase signals for a single antenna.

### SUMMARY

A first aspect of the present disclosure is directed to a dual-antenna communication device comprising:
- a controller;
- a first antenna;
- a second antenna;
wherein the controller is configured to select the first antenna and the second antenna via a first interface of the controller and via a second interface of the controller, wherein the controller is configured to select the antennas via signal phases on the interfaces.

In this way, no external physical switches are needed for selecting and controlling the antennas, which may be advantageous because it may reduce the area of the printed circuit board, make it cheaper, and increase integration.

A second aspect of the disclosure is directed to a method of operating a dual-antenna communication device, comprising the steps:
- providing transmission signals on connectors of a second interface of a controller of the dual-antenna communication device;
- providing receiving signals on connectors of a first interface of a controller of the dual-antenna communication device; and
- selecting antennas being in functional connection with the connectors of the interfaces depending on a phase setting of the signals on the connectors of the interfaces.

A third aspect of the disclosure is directed to a computer-implemented method comprising executable instructions which, when executed by a dual-antenna communication device, cause said dual-antenna communication device to carry out the proposed method.

In one or more embodiments, the controller is configured to select the antennas depending on in-phase signals or differential-mode signals on said interfaces.

In one or more embodiments, the dual-antenna communication device further comprises a first matching network to adapt the first antenna to the second interface.

In one or more embodiments, the dual-antenna communication device further comprises a second matching network to adapt the second antenna to the second interface.

In one or more embodiments, the dual-antenna communication device further comprises a third matching network to remove harmonics from a transmission signal. In this way, an EMC filter is provided, which can enhance the transmission signal purity of the dual-antenna communication device.

In one or more embodiments, the dual-antenna communication device further comprises an RF sense path configured to sense a voltage on the first antenna or on the second antenna. In this way, it is possible to sense, e.g., an approaching reader to the first or second antenna. In other words, when one antenna is being used, it is possible to detect an activity on the other antenna without interrupting an ongoing communication or power transfer on the used antenna.

In one or more embodiments, the RF sense path is configured to sense a voltage on the first antenna and the second antenna.

In one or more embodiments, the RF sense path comprises a connector and has a threshold that decides whether an activity takes place on the antenna it is connected to.

In one or more embodiments, signals of the second antenna or signals of the first antenna are sensed. In this way, an RF sensing is implemented depending on which antenna priority is intended to be given.

In one or more embodiments, a specific connector of the first interface may be disabled.

In one or more embodiments, the disabling to the specific connector of the first interface is done externally or internally in the controller.

In one or more embodiments, the first interface is a receiving interface and the second interface is a transmission interface.

### BRIEF DESCRIPTION OF DRAWINGS

The above discussion/summary is not intended to describe each embodiment or every implementation of the present disclosure; the drawings and detailed description that follow also exemplify various embodiments. The aspects defined above and further aspects of the present disclosure are apparent from the examples of embodiment to be described hereinafter with reference to the appended drawings, which are explained with reference to the examples of embodiment. Therefore, the disclosure is not limited to the examples of embodiment.

All illustrations in the drawings are schematical. In different figures, similar or identical elements or features are provided with the same reference signs or reference signs that are different from the corresponding reference signs only within the first digit. To avoid unnecessary repetitions, elements or features that have already been elucidated concerning a previously described embodiment are not elucidated again at a later position in the description.

Various example embodiments may be more completely understood in consideration of the following detailed description in connection with the accompanying drawings in which:
- FIG. 1: shows a dual-antenna communication device;
- FIG. 2: shows in-phase signals;
- FIG. 3: shows opposite-phase signals;
- FIG. 4: shows a further dual-antenna communication device;
- FIG. 5: shows a further dual-antenna communication device;
- FIG. 6: shows a further dual-antenna communication device;
- FIG. 7: shows a further dual-antenna communication device; and
- FIG. 8: shows a flow of a method of operating a dual-antenna communication device.

While various embodiments discussed herein are amenable to modifications and alternative forms, aspects thereof have been shown by example in the drawings and will be described in detail. It should be understood, however, that the intention is not to limit the disclosure to the particular embodiments described. On the contrary, the purpose is to cover all modifications, equivalents, and alternatives falling within the scope of the disclosure, including aspects defined in the claims. In addition, the term "example" used throughout this application is only by way of illustration and not limitation.

### DESCRIPTION OF EMBODIMENTS

The dual-antenna communication device of the present disclosure enables the use of no switches and related controls (assigned general purpose Input/Outputs from NFC-Controller). Moreover, a transformer (balun) usage can be omitted. Further, a reduced bill of material (BOM) reduces PCB area, which, as a consequence, lowers costs.

Aspects of the present disclosure are believed to be applicable to various types of devices, apparatuses, systems, and methods. At the same time, not necessarily so limited, various aspects may be appreciated through the following discussion of non-limiting examples that use exemplary contexts.

In the following description, various details are set forth to describe specific examples presented herein. However, it should be apparent to one skilled in the art that one or more other examples and/or variations of these examples may be practiced without all the specific details given below. In other instances, well-known features have not been described in detail so as not to obscure the description of the examples herein. For ease of illustration, the same reference signs may be used in different diagrams to refer to the same elements or additional instances of the same element. Also, although aspects and features may, in some cases, be described in individual figures, it will be appreciated that features from one figure or embodiment can be combined with features of another figure or embodiment even though the combination is not explicitly shown or explicitly described as a combination.

An aspect of the present disclosure can be seen in a switchless antenna selection (no switch and GPIOs available for other purposes). Consequently, enhanced performance results, e.g., higher transmission power efficiency and receiver sensitivity, which is an effect of no extra losses due to switches.

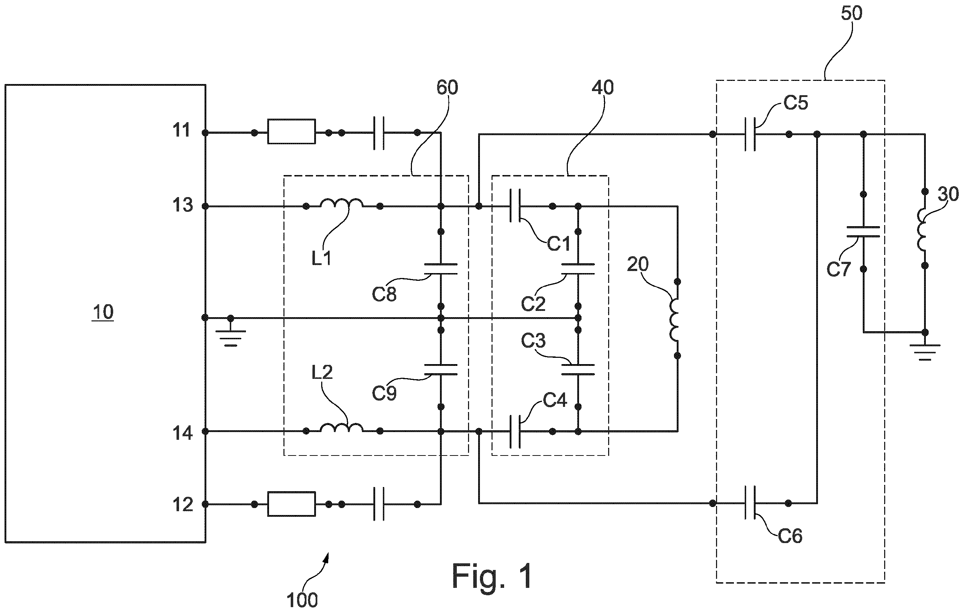

FIG. 1 shows a circuit diagram of a dual-antenna communication device 100 for transmitting and receiving wireless electromagnetic signals. In a transmission mode, the first antenna 20 receives the signal from a connector 13 of the second interface at one of its terminals and the signal from a connector 14 of the second interface at the other, so the voltage across the two terminals of the first antenna 20 (differential antenna) is the difference between the signals of the two connectors 13, 14. A second antenna 30 (single ended antenna) receives the signals of the two connectors 13, 14 at the same terminal side, the other terminal being connected to GND so that the voltage across the terminals of the second antenna 30 is the sum of the two signals.

If the signals on connectors 13 and 14 are in phase, all power is mainly delivered to the second antenna 30, and essentially no power is delivered to the first antenna 20. If the signals on connectors 13 and 14 are opposite-phase, all power is mainly delivered to the first antenna 20, and essentially no power is delivered to the second antenna 30.

In this way, depending on the phase setting of the transmission signals either the first antenna 20 or the second antenna 30 is selected for transmitting and receiving, due to the fact that the second antenna 30 is single-ended and the first antenna 20 is a differential antenna. Hence, a communication process can be established through one of antennas 20, 30 via phase setting of the transmission signal.

In other words, in a transmission mode, to select the first antenna 20, controller 10 provides differential signals (opposite-phase signals) to connectors 13 and 14 of the second interface so that all electromagnetic energy is provided for the first antenna 20 and low electromagnetic energy, preferably no electromagnetic energy, to the second antenna 30.

In order to select the second antenna 30, controller 10 provides in-phase signals to connectors 13, 14 of the second interface, which represent transmission connectors so that all power is directed to the second antenna 30 and only low power, preferably no power, to the first antenna 20.

Transmission signals provided in the above-illustrated way may optionally be pre-filtered by an EMC filter 60 with inductors L1, L2, and capacitors C8 and C9 (LC low-pass filters). By means of the EMC filter 60, frequency components that are not needed can then be removed. For example, when the transmitter is not generating a pure sinusoidal transmitter signal but a rectangular one, many harmonics are present in said transmitter signal, and the EMC filter 60 removes harmonics. As a result, a signal with a specified frequency (e.g. 13.56 MHz) is provided. Moreover, with a certain output power, said EMC filter 60 may be helpful in fulfilling regulatory requirements.

Each antenna 20 and 30 is functionally connected to a matching network 40 and 50, respectively, to adapt the first and second antenna 20 and 30 impedance to corresponding drivers (not shown) of the controller 10 (e.g., NFC controller). In this context, a first matching network 40 comprising capacitors C1...C4 adapts the impedance of the first antenna 20 to said drivers of said controller 10, and a second matching network 50 having capacitors C5...C7 adapts the impedance of the second antenna 30 to said drivers of said controller 10.

In a reception mode, one terminal of the first antenna 20 is linked to a connector 11 of the first interface. The other terminal of the first antenna 20 is functionally connected to a further connector 12 of the first interface so that the electric pick-up voltage from the first antenna 20 is applied to the first interface in order of a receiver (not shown) of the controller 10.

The signal received from the second antenna 30 is linked to both connectors 11, 12 of the first interface, which also implement receiver inputs.

Controller 10 is configured to measure either the difference of the two connectors 11, 12 (RX inputs) of the first interface, RX = RX1 - RX2 or RX2 - RX1 in the case of a differential receiver. Alternatively, in the case of a single-ended receiver, only one of said connectors 11, 12 may be used for single-ended or differential antennas. In this way, the dual-antenna communication device 100 can be used in many different ways under usage of different types of receivers with only one or with both antennas 20, 30.

Controller 10 measures a signal on connectors 11 and 12 of the first interface and decodes either one of connectors 11 or 12 or also, either the sum or the difference of both connectors 11 and 12. In this way, different receivers can be used to evaluate received signals.

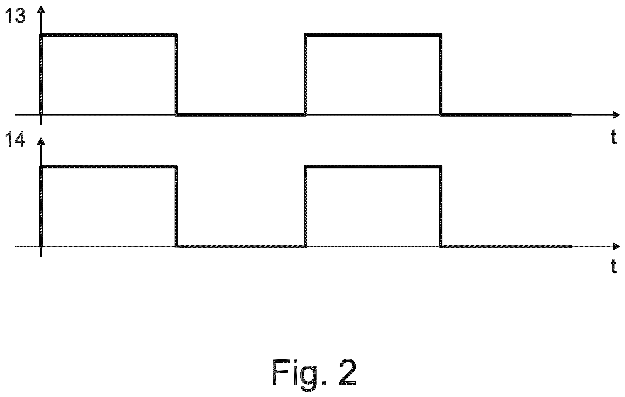

FIG. 2 shows a timing diagram with in-phase signals over time t. The above diagram shows a signal on connector 13 of the second interface, and the lower diagram shows a signal on connector 14 of the second interface. Because the signals on both connectors 13 and 14 of the second interface are in-phase signals, the transmit power is essentially routed completely to the second antenna 30 and essentially not to the first antenna 20.

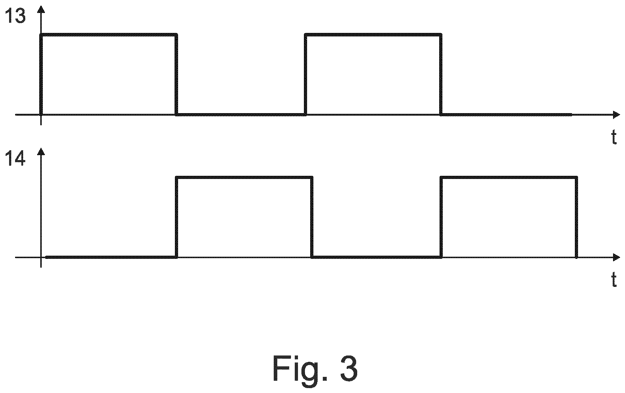

FIG. 3 shows a timing diagram with opposite-phase signals over time t. The above diagram shows a signal on output 13 of the second interface, and the lower diagram shows a signal on output 14 of the second interface. Because the signals on both connectors 13 and 14 of the second interface are opposite-phase signals, the transmit power is essentially routed completely to the first antenna 20 and essentially not to the second antenna 30.

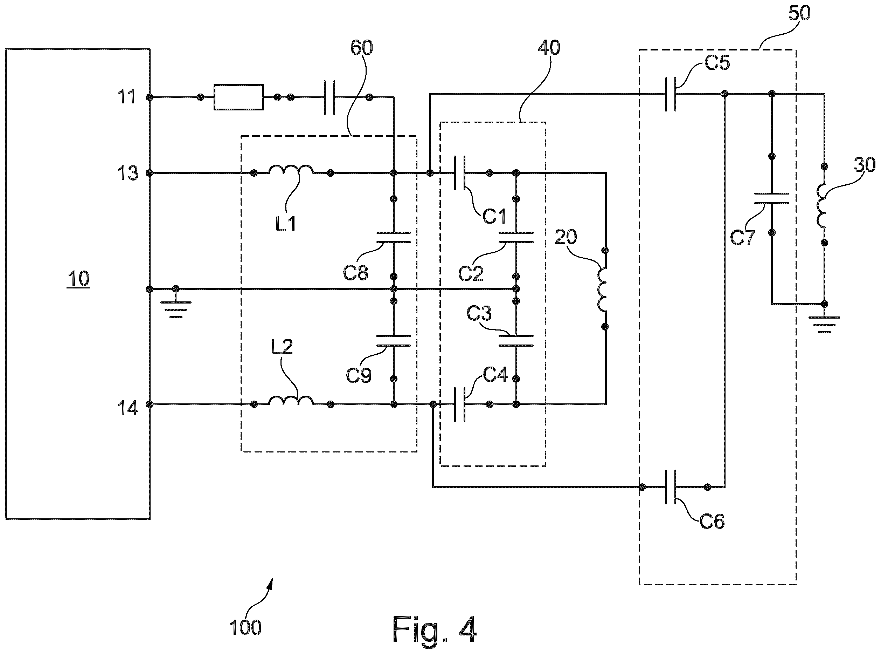

FIG. 4 shows an alternative dual-antenna communication device 100 suited to be operated with a single-ended receiver. In its transmission mode, the same applies as described in the context of the dual-antenna communication device 100 of FIG. 1.

In its reception mode, one terminal of the first antenna 20 is functionally connected to one of the connectors 11 or 12 of the first interface. As shown in Fig. 4, a terminal of the first antenna 20 is functionally connected to the connector 11 of the first terminal, so that a part of the pick-up voltage from the first antenna 20 is applied on RX connector 11. The pick-up signals of the second antenna 30 are linked only to the same RX connector 11 of the first interface as the first antenna 20. Alternatively, the pick-up signal of the second antenna 30 could be linked only to the connector 12 of the first interface (not shown in figures).

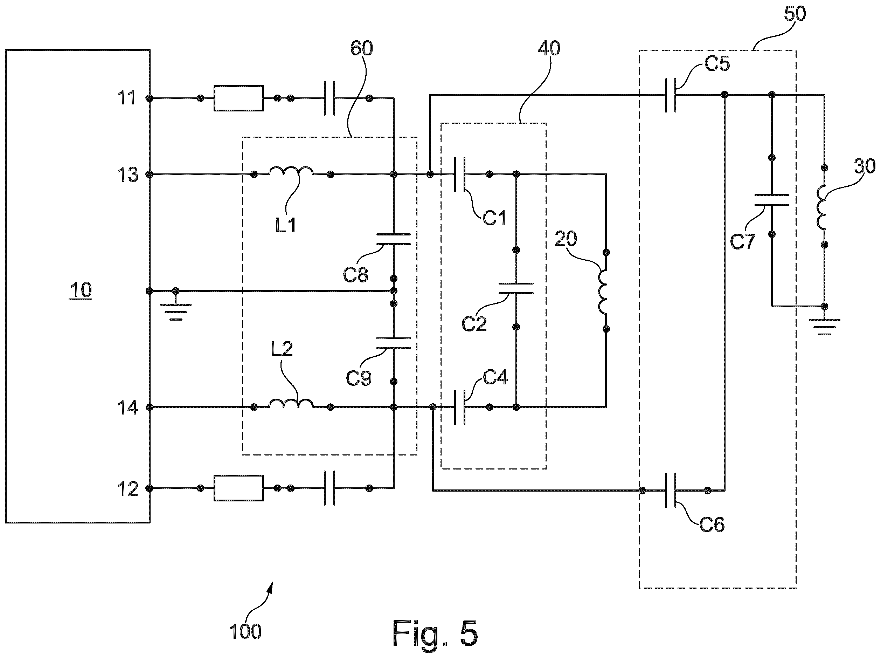

FIG. 5 shows a further alternative dual-antenna communication device 100. One recognizes a single capacitor C2 parallel to the differential first antenna 20. In other words, the two capacitors C2 and C3 of the second matching network 40 that are in parallel with the differential first antenna 20 (shown in FIG. 4) can be replaced by a single capacitor C2. Of course, the two alternatives shown in FIGs. 4 and 5 can be combined. In this way, the second matching network 40 is configured to match the impedance of the second antenna 20 to the impedance that is needed for the second interface implemented as a TX interface.

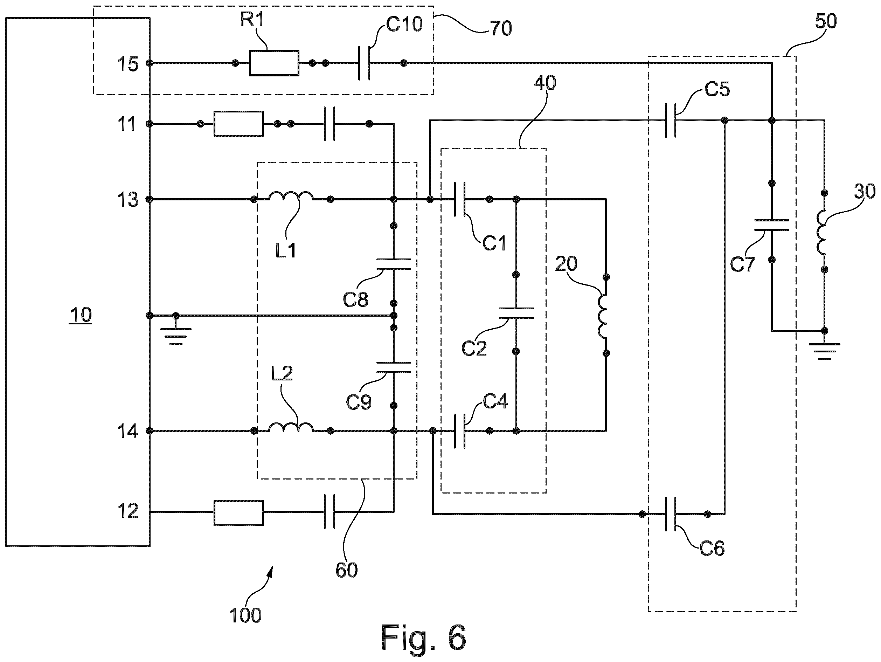

FIG. 6 shows a further alternative dual-antenna communication device 100. In this case, controller 10 can detect whether an external device (e.g. NFC device, 13.56 MHz reader, NFC charging device, etc.) is at communication distance on the first antenna 20 while the second antenna 30 is used for charging accessories on multiple antenna solutions. The detection can be done without interrupting the action on the current active antenna, leading to time optimization. For example, if the first antenna 20 charges an accessory, detection from the second antenna 30 can be done without disturbing or interrupting the charging. Hence, there is no need to repeatedly switch antennas to check the presence of a device on the antennas 20 and 30. In this way, an effective method is provided to distinguish the presence of RF field at the first antenna 20, the second antenna 30, or both antennas 20 and 30.

In the transmission mode, the first antenna 20 receives the signal from connector 13 of the second interface at one of its terminals and the signal from connector 14 of the second interface at the other one, so that the voltage across the two terminals of the first antenna 20 is the difference of the two TX signals. The second antenna 30 receives the two TX signals at the same terminal side, the other terminal being connected to GND so that the voltage across the terminals of the second antenna 30 is the sum of the two TX signals. TX signals are optionally pre-filtered by a third matching network 60 (an LC low-pass filter with inductors L1, L2 and capacitors C8, C9). In this way, each antenna 20 and 30 has a matching network 40 and 50, respectively, to adapt the impedance of the antennas 20 and 30 to the corresponding drivers of the controller 10.

In the reception mode one terminal of the first antenna 20 is functionally connected to the connector 11 of the first interface and the other terminal of the first antenna 20 is functionally connected to the connector 12 of the first interface, so that the pick-up voltage from the first antenna 20 is applied between the connectors 11 and 12 of the receiver of the controller 10. The received signal from the second antenna 30 is functionally connected to both RX connectors 11 and 12.

In the arrangement of FIG. 6, one recognizes an RF-sense path 70 having a resistor R1 in series with a capacitor 10 functionally connected to a connector 15 of the controller 10. Alternatively, another filtering network not shown in the figures is conceivable for implementing the RF-sense path 70. The arrangement of FIG. 6 shows an example of implementation when the detection is made on the single-ended second antenna 30. Input signals on said connector 15 are evaluated with a specific threshold to decide which activity occurs on the second antenna 30.

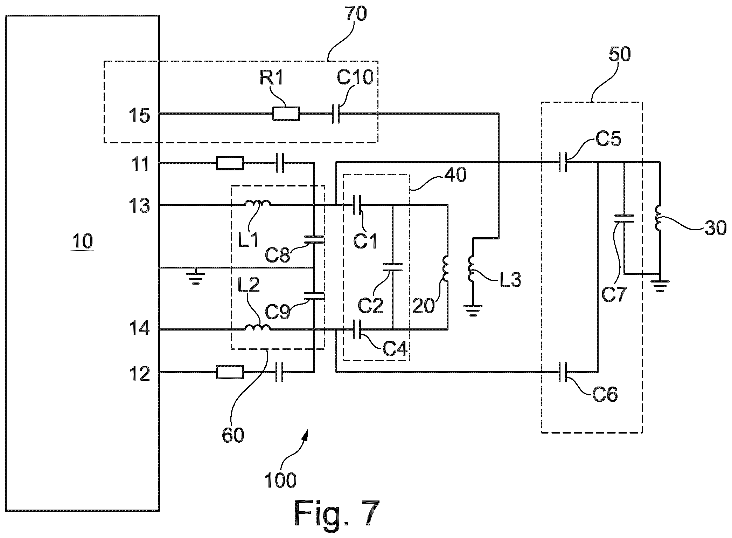

FIG. 7 shows a further alternative dual-antenna communication device 100. In this case, controller 10 can detect whether an external device is at communication distance on the differential first antenna 20 while the single-ended second antenna 30 can e.g. be used for charging accessories. By means of an inductor L3, which is magnetically coupled with the first antenna 20, an activity on the first antenna 20 can be recognized on the RF sense path 70, while at the same time a transmission activity occurs via the second antenna 30. This arrangement may be helpful if the single-ended second antenna 30 is the majority of the time in use and to connect the RF sense path 70 to the differential first antenna 20.

The arrangement of FIGs. 6 and 7 may be useful with dual antenna solutions for which the antennas 20, 30 are used sequentially when controller 10 is used to charge an accessory (pen, earbuds, etc.) on one antenna. If an external communication device is within communication range of the other antenna, the receiver will not detect it, and the transaction will not occur. By means of the RF sense path 70, controller 10 can detect the external device. Consequently, controller 10 could interrupt the charging, switch to the other antenna, make the transaction, and then resume the charging on the previous antenna.

The antennas 20 and 30 are selected sequentially, one after the other, during the polling loop. In order to select the first antenna 20, controller 10 provides differential signals to the connectors 13 and 14 of the second interface so that essentially all power is routed to the first antenna 20 and only very little, ideally none, to the second antenna 30. Controller 10 measures the difference between the two connectors 11 and 12, of the first interface that is, RX = RX1- RX2 or RX2-RX1 (differential receiver), or one RX side (single-ended receiver). As shown in FIG. 6, the RF sense path 70 is active on the second antenna 30.

In order to select the second antenna 30, controller 10 provides in-phase signals to the connectors 13 and 14 of the second interface so that all power is routed to the second antenna 30 and only very little, ideally none, to the first antenna 20. The Controller 10 measures both inputs 11 and 12 (single-ended receiver) and decodes either one of the connectors 11 12 or the sum of both.

With this solution, simultaneous field detection on both antennas 20 and 30 is possible, and the external field sense allows discrimination of which antenna is in the field. Any device using a loop antenna for power transfer and/or communications with more than two antennas has various use cases (NFC, A4WP, Qi charging, etc.).

An activity on any of antennas 20, 30 can be performed by means of a sensing of circumstances on the first interface of the controller 10.

The present disclosure proposes that a single controller 10 feeds only one antenna out of two antennas at a time by setting its transmitting signal phases (differential or in-phase signals). The proposed dual-antenna communication device 100 can be any device using NFC function with more than two antennas with various use cases.

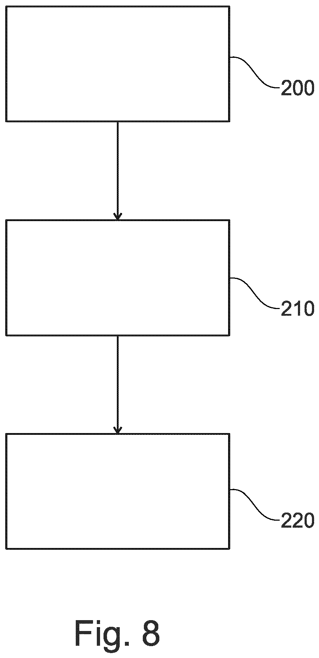

FIG. 8 shows a flow of a proposed method to operate a dual-antenna communication device 100.

In step 200 transmission signals are provided on connectors 13, 14 of a second interface of a controller 10 of the dual-antenna communication device 100.

In step 210 receiving signals are provided on connectors 11, 12 of a first interface of the controller 10 of the dual-antenna communication device 100.

In step 220 antennas 20, 30 being in functional connection with the connectors 11, 12, 13, 14 of the interfaces are selected depending on a phase setting of the signals on the connectors 11, 12, 13, 14 of the interfaces.

As another example, where the specification may make reference to a "first" type of structure, a "second" type of structure, where the adjectives "first" and "second" are not used to connote any description of the structure or to provide any substantive meaning; rather, such adjectives are merely used for English-language antecedence to differentiate one such similarly-named structure from another similarly-named structure.

Based upon the above discussion and illustrations, those skilled in the art will readily recognize that various modifications and changes may be made to the various embodiments without strictly following the exemplary embodiments and applications illustrated and described herein. For example, methods as exemplified in the Figures may involve steps carried out in various orders, with one or more aspects of the embodiments herein retained, or may involve fewer or more steps.

It should be noted that the term "comprising" does not exclude other elements or steps and "a" or "an" does not exclude a plurality. Also, elements described in association with different embodiments may be combined. It should also be noted, that reference signs in the claims should not be construed as limiting the scope of the claims.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code, or other formats for performing some of the steps. Any of the above may be embodied on a computer-readable medium, which may include storage devices and signals, in compressed or uncompressed form. As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and producing thereby a result in the form of information or signals (an output). Depending on the context, the term "computer" will mean either a processor in particular or more generally a processor in association with an assemblage of interrelated elements contained within a single case or housing.

It is noted that the embodiments above have been described with reference to different subject matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject matter also any combination of features relating to different subject-matters, in particular a combination of features of the method-type claims and features of the apparatus-type claims, is considered to be disclosed with this document.

### Reference signs:

- 10: controller
- 11.. 14: connector
- 15: input
- 20: 1^{st} antenna
- 30: 2^{nd} antenna
- 40: 1^{st} matching network
- 50: 2^{nd} matching network
- 60: 3^{rd} matching network
- 70: RF sense path
- 100: dual-antenna communication device
- 200...220: method steps

## Claims

1. A dual-antenna communication device (100), comprising:
- a controller (10);
- a first antenna (20);
- a second antenna (30);
- wherein the controller (10) is configured to select the first antenna (20) and the second antenna (30) via a first interface of the controller (10) and via a second interface of the controller (10), wherein the controller is configured to select the antennas (20, 30) via signal phases on the interfaces.

2. The dual-antenna communication device (100) according to claim 1, wherein the controller (10) is configured to select the antennas (20, 30) depending on in-phase signals or on differential-mode signals on said interfaces.

3. The dual-antenna communication device (100) according to claim 1 or 2, further comprising a first matching network (40) to adapt the first antenna (20) to the second interface of the controller (10).

4. The dual-antenna communication device (100) according to any of the preceding claims, further comprising a second matching network (50) to adapt the second antenna (30) to the second interface of the controller (10).

5. The dual-antenna communication device (100) according to any of the preceding claims, further comprising a third matching network (60) to remove harmonics from a transmission signal.

6. The dual-antenna communication device (100), according to any of the preceding claims, further comprising an RF sense path (70) being configured to sense a voltage on the first antenna (20) or on the second antenna (30).

7. The dual-antenna communication device (100), according to claim 6, wherein the RF sense path (70) is configured to sense a voltage on the first antenna (20) and the second antenna (30).

8. The dual-antenna communication device (100) according to claim 6 or 7,
wherein the RF sense path (70) comprises a connector (15) and has a threshold in order to decide what activity occurs on the antenna it is connected to.

9. The dual-antenna communication device (100) according to any of the preceding claims, wherein signals of the second antenna (30) or signals of the first antenna (20) are sensed.

10. The dual-antenna communication device (100) according to any of the preceding claims, wherein a specific connector (11, 12) of the first interface may be disabled.

11. The dual-antenna communication device (100) according to any of the preceding claims, wherein the first interface is a receiving interface and wherein the second interface is a transmission interface.

12. A method of operating a dual-antenna communication device (100), comprising the steps:
- providing transmission signals on connectors (13, 14) of a second interface of a controller (10) of the dual-antenna communication device (100);
- providing receiving signals on connectors (11, 12) of a first interface of the controller (10) of the dual-antenna communication device (100); and
- selecting antennas (20, 30) being in functional connection with the connectors (11, 12, 13, 14) of the interfaces depending on a phase setting of the signals on the connectors (11, 12, 13, 14) of the interfaces.

13. The method of claim 12, wherein the antennas (20, 30) are selected depending on in-phase signals or opposite-phase signals on the connectors (11, 12, 13, 14) of the first and second interfaces.

14. The method according to claim 12 or 13, further comprising the steps:
- sensing of a signal on a connector (15) being functionally connected to a first antenna (20) or to a second antenna (30); and
- adapting a phase setting of transmission signals on the second interface depending on the sensed signal on the connector (15).

15. A computer-implemented method comprising executable instructions which, when executed by an arrangement (100) cause said dual-antenna communication device (100) to carry out the method of claims 12 to 14.
